(19) Europäisches Patentamt
European Patent Office
Office européen des brevets

(11) EP 3 067 675 B1

(12) FASCICULE DE BREVET EUROPEEN

(45) Date de publication et mention
de la délivrance du brevet:
**26.04.2023 Bulletin 2023/17**

(21) Numéro de dépôt: **16156190.7**

(22) Date de dépôt: **17.02.2016**

(51) Classification Internationale des Brevets (IPC):
**G01J 5/04** (2006.01)  **G01J 5/02** (2022.01)
**G01J 5/20** (2006.01)  **G01J 5/10** (2006.01)

(52) Classification Coopérative des Brevets (CPC):
**G01J 5/045; G01J 5/0225; G01J 5/10; G01J 5/20;**
G01J 2005/0077

(54) **DISPOSITIF DE DETECTION DE RAYONNEMENT ELECTROMAGNETIQUE A STRUCTURE D'ENCAPSULATION HERMETIQUE A EVENT DE LIBERATION**

VORRICHTUNG ZUR ERFASSUNG VON ELEKTROMAGNETISCHER STRAHLUNG MIT HERMETISCHER EINKAPSELUNGSSTRUKTUR MIT AUSLASSÖFFNUNG

DEVICE FOR DETECTING ELECTROMAGNETIC RADIATION WITH SEALED ENCAPSULATION STRUCTURE HAVING A RELEASE VENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.02.2015 FR 1551489**

(43) Date de publication de la demande:
**14.09.2016 Bulletin 2016/37**

(73) Titulaire: **Commissariat à l'Énergie Atomique et aux Énergies Alternatives
75015 Paris (FR)**

(72) Inventeurs:
• **DUMONT, Geoffroy
75011 PARIS (FR)**
• **CARLE, Laurent
38000 GRENOBLE (FR)**
• **IMPERINETTI, Pierre
38180 SEYSSINS (FR)**
• **POCAS, Stephane
38000 GRENOBLE (FR)**
• **YON, Jean-Jacques
38360 SASSENAGE (FR)**

(74) Mandataire: **INNOV-GROUP
310, avenue Berthelot
69372 Lyon Cedex 08 (FR)**

(56) Documents cités:
**EP-A2- 1 243 903     EP-A2- 2 581 339
EP-B1- 1 067 372     US-A1- 2005 176 179
US-A1- 2012 132 804**

• **LEE JAE-WUNG ET AL: "Optimization of etch-hole design for the thin film packaging", 2013 IEEE 15TH ELECTRONICS PACKAGING TECHNOLOGY CONFERENCE (EPTC 2013), IEEE, 11 December 2013 (2013-12-11), pages 130-134, XP032569703, DOI: 10.1109/EPTC.2013.6745698 [retrieved on 2014-02-19]**
• **G. Dumont ET AL: "Current progress on pixel level packaging for uncooled IRFPA", Visual Communications and Image Processing; 20-1-2004 - 20-1-2004; San Jose, vol. 8353, 1 May 2012 (2012-05-01), pages 83531I-83531I-8, XP055232140, DOI: 10.1117/12.919918 ISBN: 978-1-62841-730-2**

EP 3 067 675 B1

## Description

## DOMAINE TECHNIQUE

Le domaine de l'invention est celui des dispositifs de détection de rayonnement électromagnétique, en particulier infrarouge ou térahertz, comportant au moins un détecteur thermique et une structure d'encapsulation qui forme une cavité hermétique dans laquelle est logé le détecteur thermique, la structure d'encapsulation comportant au moins un évent de libération. L'invention s'applique notamment au domaine de l'imagerie infrarouge et de la thermographie.

## ÉTAT DE LA TECHNIQUE ANTÉRIEURE

Un dispositif de détection de rayonnement électromagnétique, par exemple infrarouge ou térahertz, comprend au moins un détecteur thermique et habituellement une matrice de détecteurs thermiques, dits élémentaires, où chaque détecteur comporte chacun une portion apte à absorber le rayonnement à détecter. Dans le but d'assurer l'isolation thermique des détecteurs thermiques, chaque portion se présente habituellement sous la forme d'une membrane suspendue au-dessus du substrat et isolée thermiquement de celui-ci par des éléments de maintien et d'isolation thermique. Ces éléments de maintien assurent également une fonction électrique en reliant électriquement les détecteurs thermiques à un circuit de lecture généralement disposé dans le substrat.

Pour assurer un fonctionnement optimal des détecteurs, un faible niveau de pression est requis. Pour cela, les détecteurs sont généralement confinés, ou encapsulés, seuls ou à plusieurs, dans des cavités hermétiques sous vide ou sous pression réduite.

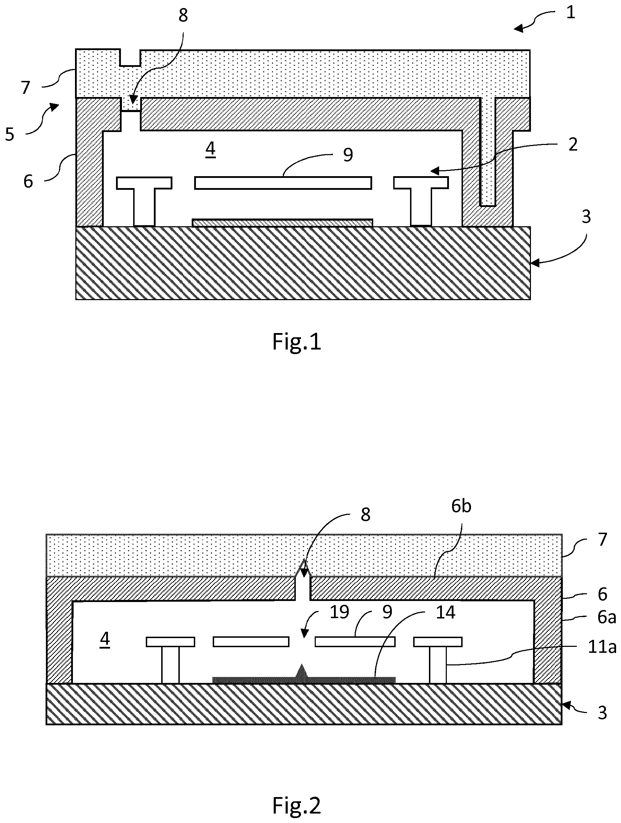

La figure 1 illustre un exemple de dispositif de détection 1 adapté à détecter un rayonnement infrarouge, plus précisément un pixel du dispositif de détection formé ici d'un détecteur bolométrique 2 reposant sur un substrat 3 et disposé seul dans une cavité hermétique 4, tel que décrit dans la publication de Dumont et al, *Current progress on pixel level packaging for uncooled IRFPA,* Proc. SPIE 8353, Infrared Technology and Applications XXXVIII, 835311 2012.

Dans cet exemple, le dispositif de détection 1 comporte une structure d'encapsulation 5, également appelée capsule, qui définit la cavité 4 dans laquelle se situe le détecteur bolométrique 2. La structure d'encapsulation 5 comporte une couche mince d'encapsulation 6 qui définit avec le substrat 3 la cavité 4, et une couche mince de scellement 7 qui recouvre la couche d'encapsulation 6 et assure l'herméticité de la cavité 4. Les couches d'encapsulation 6 et de scellement 7 sont transparentes au rayonnement électromagnétique à détecter.

Le dispositif de détection 1 est réalisé par des techniques de dépôt de couches minces et notamment des couches sacrificielles. Au cours du procédé de réalisation, les couches sacrificielles sont éliminées et évacuées hors de la cavité au travers d'un ou plusieurs évents de libération 8 prévus dans la couche d'encapsulation 6. La couche de scellement 7 assure, après élimination des couches sacrificielles et mise sous vide de la cavité 4, le bouchage des évents de libération 8.

Cependant, le dispositif de détection peut voir ses propriétés optiques et/ou électriques, notamment celles de la membrane absorbante, modifiées voire dégradées à la suite de certaines étapes du procédé de réalisation qui suivent celle de la réalisation de la membrane.

US2005/0176179 divulgue un dispositif de détection comportant une structure d'encapsulation présentant une pluralité d'évents de libération.

## EXPOSÉ DE L'INVENTION

L'invention a pour objectif de remédier au moins en partie aux inconvénients de l'art antérieur, en particulier de proposer un dispositif de détection de rayonnement électromagnétique dont ses propriétés optiques et/ou électriques, notamment les propriétés de la membrane absorbante, sont préservées lors des étapes ultérieures à l'étape de réalisation de la membrane.

Un autre but de l'invention est de proposer un dispositif de détection dont les risques de détérioration mécanique du détecteur et/ou de la structure d'encapsulation sont minimisés.

L'invention propose à cet effet un dispositif de détection de rayonnement électromagnétique, comprenant un substrat, au moins un détecteur thermique disposé sur le substrat, comportant une membrane adaptée à absorber le rayonnement à détecter, suspendue au-dessus du substrat et isolée thermiquement de celui-ci par des éléments de maintien et d'isolation thermique, une structure d'encapsulation dudit au moins un détecteur thermique, comportant une couche d'encapsulation s'étendant autour et au-dessus dudit au moins un détecteur thermique de manière à définir avec le substrat une cavité dans laquelle ledit au moins un détecteur thermique est situé.

Selon l'invention, la couche d'encapsulation comprend au moins un orifice traversant dit évent de libération, chaque évent de libération étant disposé de sorte qu'au moins un détecteur thermique ait un unique évent de libération situé en regard de la membrane absorbante correspondante, de préférence au droit du centre de ladite membrane absorbante.

Selon un mode de réalisation, une pluralité de détecteurs thermiques est disposée dans ladite cavité, la couche d'encapsulation comprenant une pluralité d'évents de libération disposés de sorte qu'au moins une partie desdits détecteurs thermiques ait chacun un unique évent de libération situé en regard de la membrane absorbante correspondante. Alternativement un unique détecteur thermique est disposé dans ladite cavité, la couche d'encapsulation comprenant alors un unique évent de libération situé en regard de la membrane absorbante du détecteur thermique. En d'autres termes, l'unique évent est situé au droit de la membrane absorbante, c'est-à-dire à la perpendiculaire de la membrane absorbante. L'unique évent n'est donc pas situé en regard des clous d'ancrage ni des bras d'isolation thermique.

Par ailleurs, chaque membrane absorbante comporte un orifice traversant, situé au droit de l'évent de libération correspondant, de dimensions égales ou supérieures à celles dudit évent. En d'autres termes, ladite membrane absorbante, en regard de laquelle est situé un évent de libération, comporte un orifice traversant, situé au droit dudit évent de libération, de dimensions égales ou supérieures à celles dudit évent.

La membrane absorbante peut comporter un empilement d'une couche bolométrique, d'une couche diélectrique structurée de manière à former deux portions distinctes, et d'une couche électriquement conductrice structurée de manière à former trois électrodes, dont deux électrodes destinées à être portées à une même potentiel électrique encadrent la troisième électrode dite centrale destinée à être portée à un potentiel électrique différent, chaque électrode étant au contact de la couche bolométrique, l'électrode centrale étant électriquement isolée des autres électrodes par la couche diélectrique, l'orifice traversant l'électrode centrale et la couche bolométrique dans une zone située entre les portions de la couche diélectrique.

La structure d'encapsulation peut comporter en outre une couche de scellement recouvrant la couche d'encapsulation de manière à rendre la cavité hermétique, le substrat comprenant une couche d'accroche disposée en regard de l'orifice traversant de la membrane correspondante, et adaptée à assurer l'adhésion du matériau de la couche de scellement.

La couche d'accroche peut s'étendre sous l'ensemble de la membrane correspondante et être réalisée en un matériau adapté pour assurer en outre la réflexion du rayonnement électromagnétique à détecter.

L'évent de libération peut présenter un profil transversal, dans un plan orthogonal au plan du substrat, dont la largeur croît à mesure que la distance au substrat augmente.

La structure d'encapsulation peut comporter en outre une couche de scellement recouvrant la couche d'encapsulation de manière à rendre la cavité hermétique, la couche de scellement comportant une bordure qui s'étend dans le sens de l'épaisseur de la couche de scellement, à partir de la bordure de l'évent de libération, avec un angle α non nul par rapport à un axe orthogonal au plan du substrat, le profil transversal de l'évent de libération formant un angle β par rapport au même axe orthogonal supérieur à l'angle α.

L'extrémité longitudinale de l'évent de libération peut présenter une forme en arc de cercle, ou être formé d'une succession de segments sensiblement rectilignes inclinés les uns par rapport aux autres.

Le dispositif de détection peut comporter une matrice de détecteurs thermiques, dans lequel la couche d'encapsulation comprend au moins une portion, dite portion d'appui interne, située entre deux détecteurs adjacents, qui prend appui directement sur le substrat.

La portion d'appui interne peut présenter un profil, dans un plan parallèle au plan du substrat, de forme oblongue, de préférence aux extrémités longitudinales arrondies.

La portion d'appui interne peut comporter une paroi latérale et une partie inférieure, ladite paroi latérale s'étendant dans un plan sensiblement orthogonal au plan du substrat sur toute la hauteur de la cavité, et la partie inférieure étant au contact du substrat.

Au moins une portion d'appui interne peut être disposée entre deux membranes absorbantes adjacentes et deux clous de maintien adjacents, chacun desdits clous de maintien participant au maintien desdites membranes adjacentes, et où la portion d'appui interne est orientée longitudinalement le long desdites membranes.

La couche d'encapsulation peut comprendre une paroi périphérique qui entoure la matrice de détecteurs, et qui présente une section, dans un plan parallèle au plan du substrat, de forme carrée ou rectangulaire, dont les coins sont arrondis.

Les éléments de maintien et d'isolation thermique peuvent comporter des clous de maintien, la couche d'accroche comportant en outre des portions sur lesquelles reposent les clous de maintien, et/ou des portions sur lesquelles reposent des portions d'appui interne de la couche d'encapsulation, étant réalisée en un matériau apte à assurer l'adhésion des clous de maintien et/ou des portions d'appui.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels, outre la figure 1 discutée précédemment :

- la figure 2 est une vue schématique en coupe d'un dispositif de détection selon un mode de réalisation, dans lequel un unique évent de libération par détecteur est disposé en regard de la membrane suspendue du détecteur;
- les figures 3 et 4 sont des vues schématiques d'un dispositif de détection selon un autre mode de réalisation, en vue de dessus (figure 3) et en coupe (figure 4), dans lequel la membrane suspendue comporte une couche diélectrique intermédiaire ;
- la figure 5 est une représentation schématique en vue de dessus d'un évent de libération selon un mode de réalisation, dans lequel l'évent présente un profil de forme oblongue à extrémités arrondies ;
- la figure 6 est une vue schématique en coupe d'un dispositif de détection selon un autre mode de réalisation, dans lequel le profil transversal de l'évent est évasé vers la couche de scellement ;

- les figures 7 à 9 sont des vues schématiques d'un dispositif de détection selon un autre mode de réalisation, dans lequel la structure d'encapsulation comporte des portions d'appui interne ;
- les figures 10 à 12 sont des vues en coupe d'un dispositif de détection représenté sur la figure 7, à différentes étapes du procédé de réalisation ;
- les figures 13 et 14 sont des représentations partielles et schématiques, en vue de dessus, de la paroi périphérique de la couche d'encapsulation selon un mode de réalisation, où la paroi comporte une portion arrondie.

## EXPOSÉ DÉTAILLÉ DE MODES DE RÉALISATION PARTICULIERS

Sur les figures et dans la suite de la description, les mêmes références représentent les éléments identiques ou similaires.

La figure 2 illustre un exemple de dispositif de détection de rayonnement électromagnétique selon un mode de réalisation.

Dans cet exemple, le dispositif de détection 1 de rayonnement électromagnétique est adapté à détecter un rayonnement infrarouge ou térahertz. Il comporte une matrice de détecteurs thermiques 2, dits élémentaires. La figure 1 est une vue partielle du dispositif de détection et ne représente qu'un seul détecteur disposé dans une cavité.

Il comprend un substrat 3, par exemple en silicium, comprenant un circuit de lecture (non représenté) par exemple réalisé en technologie CMOS, permettant d'appliquer les polarisations nécessaires au fonctionnement des détecteurs et de lire les informations issues de ceux-ci.

Le détecteur thermique 2 comprend une portion adaptée à absorber le rayonnement à détecter. Cette portion absorbante est généralement isolée thermiquement du substrat et peut être disposée au niveau d'une membrane 9, dite absorbante, suspendue au-dessus du substrat 3 par des éléments de maintien et d'isolation thermique 11 tels que des clous d'ancrage 11a associés à des bras d'isolation thermique 11b. Les membranes 9 sont espacées du substrat 3 d'une distance typiquement comprise entre $1\mu m$ et $5\mu m$, de préférence $2\mu m$ quand les détecteurs sont conçus pour la détection d'un rayonnement infrarouge de longueur d'onde comprise entre $8\mu m$ et $14\mu m$.

Dans la suite de la description, le détecteur thermique 2 est un bolomètre dont la membrane absorbante 9 comporte un matériau thermistance dont la conductivité électrique varie en fonction de l'échauffement de la membrane. Cependant, cet exemple est donné à titre illustratif et est nullement limitatif. Tout autre type de détecteur thermique peut être utilisé, par exemple des détecteurs pyroélectriques, ferroélectriques, voire des thermopiles.

Dans cet exemple, un pixel du dispositif de détection comporte un détecteur 2 ainsi que ses propres clous d'ancrage 11a et bras d'isolation thermique (non représentés). D'autres configurations sont possibles, notamment lorsqu'une matrice de détecteurs est disposée dans une même cavité. Dans ce cas, les détecteurs peuvent être rapprochés les uns des autres, notamment en reliant les bras d'isolation thermique de différents détecteurs thermiques voisins à un même clou d'ancrage, l'architecture de lecture des détecteurs thermiques étant alors adaptée, comme le décrivent les documents EP1106980 et EP1359400. Il en résulte une amélioration de la sensibilité des détecteurs de par l'allongement des bras d'isolation et une augmentation du taux de remplissage par la réduction de la surface de chaque pixel non dédiée à l'absorption du rayonnement électromagnétique. Le dispositif de détection est ainsi particulièrement adapté aux petits pas de matriçage, par exemple entre $25\mu m$ et $17\mu m$, voire $12\mu m$.

Le dispositif de détection 1 comporte une structure d'encapsulation 5, ou capsule, qui définit, avec le substrat 3, une cavité hermétique 4 à l'intérieur de laquelle se trouve ici le détecteur thermique 2. La structure d'encapsulation 5 est formée d'une couche mince d'encapsulation 6 déposée de sorte qu'elle comporte une paroi périphérique 6a qui entoure le détecteur 2 et une paroi supérieure 6b qui s'étend au-dessus du détecteur 2. La paroi supérieure 6b est sensiblement plane et s'étend au-dessus de la membrane suspendue 9 à une distance par exemple comprise entre $0,5\mu m$ et $5\mu m$, de préférence $1,5\mu m$. La couche d'encapsulation comporte au moins un orifice traversant, dit évent de libération, destiné à permettre l'évacuation des couches sacrificielles lors du procédé de réalisation du dispositif. L'évent forme une ouverture locale dans la couche d'encapsulation 6 débouchant dans la cavité 4.

La structure d'encapsulation comporte en outre une couche de scellement qui recouvre la couche d'encapsulation et obture l'évent de libération. Cette couche de scellement présente habituellement une fonction supplémentaire d'antireflet.

La couche d'encapsulation 6 comporte au moins un évent de libération 8 disposé de sorte qu'au moins un détecteur thermique 2 présent dans la cavité 4 ait un unique évent de libération 8 situé en regard de sa membrane absorbante 9, de préférence au droit du centre de la membrane absorbante 9. En d'autres termes, l'unique évent 8 est situé au droit de la membrane absorbante 9, c'est-à-dire à la perpendiculaire de la membrane absorbante 9. L'unique évent 8 n'est donc pas situé en regard des clous d'ancrage 11a ni des bras d'isolation thermique 11b.

Les inventeurs ont constaté que ce positionnement d'un unique évent en regard de la membrane absorbante du détecteur thermique permet de s'affranchir, après élimination des couches sacrificielles, de la présence de résidus de couches sacrificielles accrochés à la membrane. La présence de ces résidus a notamment été observée lorsqu'au moins deux évents par détecteur sont disposés de part et d'autre de la membrane. Les résidus sont généralement situés dans une zone équidistante des différents évents, dans laquelle se trouve la membrane suspendue. Ils peuvent modifier les propriétés optiques et/ou électriques et/ou thermiques de la membrane (par exemple par augmentation de la masse de la membrane ce qui induit une diminution du temps de réponse du détecteur), voire modifier le niveau de pression résiduelle sous l'effet d'un dégazage progressif. De plus, la réalisation de l'évent est simplifiée de par son éloignement des zones à forte topographie que sont les tranchées (décrites plus loin), ce qui permet d'obtenir un bon contrôle dimensionnel de la forme de l'évent.

Dans le cas où la cavité 4 loge un unique détecteur thermique 2, la couche d'encapsulation 6 comporte alors un unique évent de libération 8 situé en regard de la membrane absorbante 9 du détecteur thermique. En général, le dispositif de détecteur comporte une matrice de détecteurs thermiques 2 où chaque détecteur est encapsulé dans une unique cavité. La structure d'encapsulation comporte alors une matrice de cavités toutes formées par la même couche d'encapsulation. Au niveau de chaque cavité, la couche d'encapsulation comporte un unique évent de libération disposé en regard de la membrane absorbante du détecteur logé dans la cavité.

Dans le cas où la cavité 4 loge une pluralité de détecteurs thermiques 2, la couche d'encapsulation comporte alors au moins un évent de libération, et de préférence une pluralité d'évents de libération disposés de sorte qu'au moins une partie desdits détecteurs thermiques 2 ait chacun un unique évent de libération 8 situé en regard de la membrane absorbante 9 correspondante. Chaque détecteur thermique de la matrice peut avoir un unique évent disposé en regard de la membrane absorbante correspondante. Alternativement, une partie seulement des détecteurs thermiques peut avoir chacun un unique évent de libération situé en regard de la membrane correspondante. Il est alors avantageux que, pour une ligne ou une colonne de détecteurs thermiques, les évents de libération soient disposés tous les N impair détecteurs. Cela permet d'éviter que des résidus de couches sacrificielles soient présents au niveau de la membrane absorbante d'un détecteur non pourvu d'un évent de libération. A titre d'exemple, dans le cas où N=3, deux détecteurs voisins non pourvus d'évent de libération sont disposés entre deux détecteurs pourvus chacun d'un unique évent de libération. Dans cet exemple, aucun des détecteurs thermiques, qu'ils soient ou non pourvus d'un évent de libération, ne verra sa membrane absorbante dégradée par la présence de résidus de couche sacrificielle. Cette variante de réalisation est particulièrement avantageuse dans le cas des faibles pas de matriçage, par exemple lorsque le pas de disposition des détecteurs est de l'ordre de 12μm ou moins.

Il est avantageux de prévoir un orifice traversant 19 au niveau de la membrane 9 du détecteur, situé au droit de l'évent 8 correspondant, et dont les dimensions sont égales ou supérieures à celles de l'évent 8, moyennant une marge de sécurité pour tenir compte d'un éventuel désalignement de l'évent et/ou de l'orifice de la membrane qui peut être de l'ordre de 200nm à 500nm. Ainsi, lors du dépôt de la couche de scellement, une portion du matériau de scellement susceptible de tomber au travers de l'évent ne viendra pas se déposer sur la membrane mais traversera l'orifice de la membrane et se déposera sur le substrat.

Il est alors avantageux de prévoir une couche d'accroche, sous la membrane 9, au niveau de l'orifice traversant 19, pour assurer l'accroche de l'aggloméré de scellement qui serait tombé. Ainsi, lors de l'étape de scellement de la cavité, dans le cas où une quantité de matière de la couche de scellement traverserait l'évent, elle viendrait se déposer et adhérer sur la couche d'accroche. Cela permet notamment de s'affranchir du type de matériau présent en surface du substrat, et plus précisément du matériau utilisé pour passiver la face supérieure du substrat.

Cette couche d'accroche 14, peut s'étendre, de manière continue ou discontinue, au niveau de différentes zones de la cavité, plus précisément sous la membrane 9 et en regard de son orifice traversant 19 pour assurer l'accroche du matériau de scellement susceptible de tomber au travers de l'évent 8 ; sous l'ensemble de la membrane 9 pour assurer une fonction optique de réflexion du rayonnement à détecter; au niveau de différentes tranchées pour la protection du substrat 3 pendant l'étape de gravure lors de la formation des tranchées et pour améliorer l'accroche de la couche d'encapsulation 6 sur le substrat ; et au niveau des clous d'ancrage 11a pour améliorer l'accroche des clous sur le substrat et améliorer la conduction électrique entre les clous et le circuit de lecture disposé dans le substrat. L'épaisseur de cette couche d'accroche est de préférence constante sur toute son étendue, et notamment au niveau des différentes zones mentionnées précédemment. Cette couche d'accroche peut être réalisée en chrome ou titane, en aluminium, en nitrure de titane, éventuellement sous forme d'un empilement de sous-couches réalisées en ces matériaux, ou autre matériau adapté, et présenter une épaisseur de l'ordre de 100nm à 400nm.

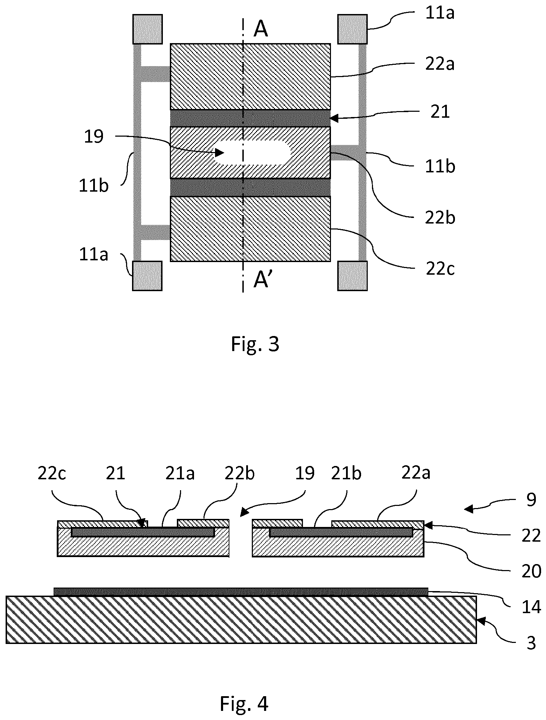

Selon un mode de réalisation représenté sur les figures 3 et 4, les détecteurs 2 dont la membrane 9 comporte un orifice traversant 19 présentent une architecture de membrane à isolation électrique intermédiaire, telle que décrite dans le document EP1067372.

La figure 3 est une vue de dessus d'une membrane absorbante 9 d'un détecteur bolométrique selon ce type d'architecture. Elle est reliée à quatre clous d'ancrage 11a et est suspendue par le biais de deux bras d'isolation thermique 11b. La figure 4 est une vue en coupe selon le plan A-A de la figure 3.

La membrane 9 comporte une couche d'un matériau bolométrique 20 (donc résistif), par exemple du silicium amorphe dopé ou de l'oxyde de vanadium. Elle comporte également une couche d'un matériau diélectrique 21, déposée sur la couche bolométrique 20 et qui recouvre celle-ci sur deux zones distinctes 21a, 21b.

Elle comporte également une couche d'un matériau électriquement conducteur 22, déposée sur la couche diélectrique 21 et la couche bolométrique 20 et gravée localement sur toute la largeur de la membrane jusqu'à la couche diélectrique de manière à former trois portions conductrices distinctes 22a, 22b, 22c. La couche conductrice 22 se prolonge sur les bras d'isolation 11b pour relier électriquement les trois portions 22a, 22b, 22c au circuit de lecture. Parmi les trois portions conductrices, deux portions 22a, 22c situées aux extrémités de la membrane 9 sont électriquement reliées à deux parties d'un même bras d'isolation 11b et forment ainsi deux électrodes destinées à être portées à un même potentiel électrique. Ces deux portions d'extrémités 22a, 22c encadrent une portion centrale 22b reliée à un autre bras d'isolation qui forme une électrode destinée à être portée à un autre potentiel électrique.

La couche diélectrique 21 est gravée de sorte que chaque électrode 22a, 22b, 22c est en contact électrique avec le matériau bolométrique 20 et que les électrodes d'extrémités 22a, 22c sont électriquement isolées de l'électrode centrale 22b.

Dans ce mode de réalisation, la membrane absorbante 9 comporte un orifice traversant 19, ici de profil oblong, disposé au centre de l'électrode centrale 22b. De préférence, l'orifice 19 est disposé au niveau où la couche diélectrique 21 est gravée. L'orifice 19 traverse ainsi uniquement l'électrode centrale 22b et la couche bolométrique 20. De préférence, la distance, mesurée dans le sens de la largeur de l'orifice 19, entre la bordure de l'orifice et la bordure de la couche diélectrique 21, en regard de l'orifice, est supérieure ou égale à l'épaisseur de la couche bolométrique 20 en contact avec l'électrode centrale 22b dans cette zone. Par ce positionnement de l'orifice, toute influence de celui-ci sur les propriétés électriques de la membrane absorbante est minimisée voire supprimée.

L'exemple décrit en référence aux figures 3 et 4 montre une couche bolométrique 20 dans la partie inférieure de la membrane 9, sur laquelle reposent la couche diélectrique 21 et les électrodes 22a, 22b, 22c. Cependant, un agencement inversé des couches est également réalisable, dans lequel les électrodes 22a, 22b, 22c sont situées dans la partie inférieure de la membrane 9, sur lesquelles reposent la couche diélectrique 21 puis la couche bolométrique 20.

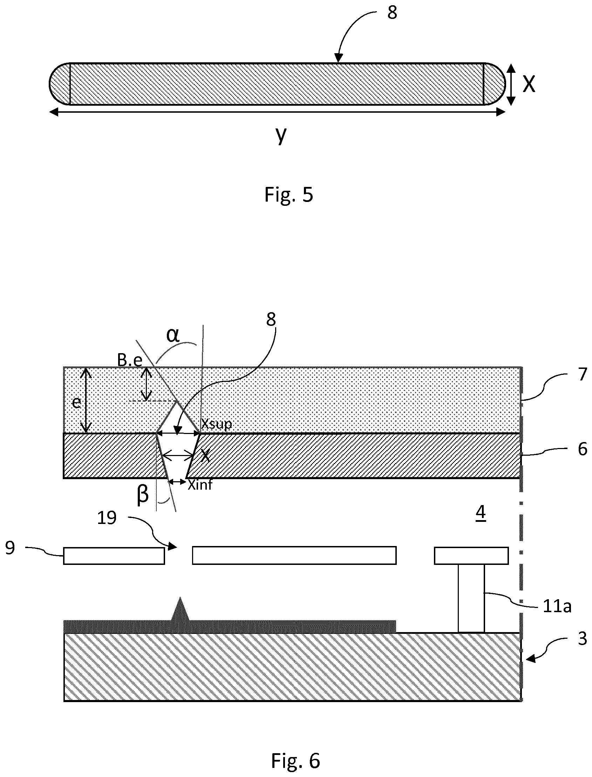

Selon un mode de réalisation représenté sur la figure 5, le profil de l'évent de libération 8, dans un plan parallèle au plan du substrat, présente une forme oblongue, c'est-à-dire allongée. Sa petite dimension X, mesurée dans le sens de la largeur de l'évent, est choisie de manière à assurer un scellement efficace de l'évent, et sa grande dimension Y, mesurée dans le sens de la longueur de l'évent, peut être ajustée pour faciliter le transit des espèces réactives et des produits de réaction de la gravure du matériau des couches sacrificielles en cours d'élimination, ce qui permet d'optimiser le temps d'évacuation des couches sacrificielles. A ce titre, la largeur X peut être typiquement comprise entre environ 150nm et 600nm, alors que la grande dimension Y peut être de l'ordre de quelques microns, par exemple 5μm.

De plus, la forme oblongue de l'évent 8 présente au moins une extrémité longitudinale, de préférence les deux extrémités longitudinales, arrondies. L'extrémité longitudinale est une extrémité de l'évent suivant l'axe longitudinal de celui-ci. A titre d'exemple, la forme arrondie d'une extrémité peut être un arc de cercle dont le rayon de courbure peut être égal à la moitié de la largeur moyenne X de l'évent. Plus généralement, elle peut correspondre à une forme courbe continue, comme dans l'exemple de la figure 5, circulaire ou elliptique, ou à une succession de segments droits ou sensiblement courbes.

Les inventeurs ont montré que cette forme d'évent permet d'éviter les risques de formation de fissures partant de la couche d'encapsulation 6 et se propageant dans la couche de scellement 7. Il est en effet essentiel d'éviter tout risque de fissures susceptibles de rompre l'herméticité de la cavité, surtout lorsqu'une même cavité loge une matrice de détecteur car un défaut local d'herméticité pourrait conduire à la perte fonctionnelle du dispositif complet. De plus, l'étape d'élimination des couches sacrificielles est optimisée, notamment en termes de durée d'élimination des couches sacrificielles, par un effet conjugué entre la forme oblongue de l'évent et la position centrale de celui-ci vis-à-vis du détecteur.

Comme le montre la figure 6, les inventeurs ont observé que la couche de scellement 7, en bordure des évents 8, a tendance à s'étendre verticalement, c'est-à-dire dans le sens de l'épaisseur de la couche 7, avec un angle α non nul par rapport à la normale, c'est-à-dire par rapport à un axe orthogonal au plan du substrat, en particulier lorsqu'une technique de dépôt de couche mince sous vide est utilisée, telle que l'évaporation ou la pulvérisation à basse pression. La largeur moyenne X des évents peut être choisie en fonction de l'épaisseur e de la couche de scellement 7 déposée, de la fraction d'épaisseur B de la couche de scellement assurant effectivement l'herméticité, et de l'angle de croissance α, à partir de la relation :

$$X = 2.e.(1-B).\tan(\alpha)$$

A titre d'exemple, pour une technique de dépôt de la couche de scellement par évaporation, l'angle α est typiquement de l'ordre de 15° à 20°. Pour une épaisseur e de couche de scellement de 1800nm et si l'on souhaite que 1200nm de couche assure l'herméticité (B=2/3), on obtient une largeur moyenne X de l'évent de l'ordre de 320nm à 410nm.

Par ailleurs, comme représenté sur la figure 6, il est avantageux que l'évent de libération 8 ait une section transversale, dans un plan orthogonal à celui du substrat, qui présente une forme dont la largeur augmente à mesure qu'on s'éloigne du substrat 3. En d'autres termes, l'évent 8 a un profil transversal évasé vers l'extérieur de la cavité. Il est donc plus étroit au niveau de son orifice inférieur débouchant sur la cavité et plus large au niveau de son orifice supérieur débouchant hors de la cavité. A titre d'exemple, la largeur $X_{inf}$ au niveau de l'orifice inférieur peut être de l'ordre de 100nm à 350nm alors que la largeur $X_{sup}$ au niveau de l'orifice supérieur peut être de l'ordre de 250nm à 800nm. Dans cet exemple, la couche d'encapsulation 6 présente une épaisseur de l'ordre de 800nm. Il résulte de cette forme de la section transversale de l'évent 8 qu'elle permet d'améliorer la qualité de scellement de l'évent. Plus précisément, pour une même épaisseur e de couche de scellement, les inventeurs ont observé que la fraction B de couche qui assure effectivement le scellement est supérieure au cas où l'évent présenterait une section transversale droite, ce qui améliore la qualité de scellement.

Une telle section transversale de l'évent peut être obtenue en générant une pente sur les flancs de la résine avant gravure de l'évent soit par fluage post-développement, soit en modifiant les conditions d'exposition et/ou de développement de la résine (dose d'insolation, focus, température et durée des recuits post-exposition) d'une façon connue par l'homme du métier. Une telle section transversale de l'évent peut également être obtenue lors de la gravure sèche de l'évent en ajoutant une composante isotrope à la gravure par exemple en ajoutant de l'oxygène dans la chimie utilisée pour graver l'évent. Dans le cas où la couche d'encapsulation 6 est constituée de silicium, l'ajout de gaz fluorés dans la chimie de gravure tels que $SF_6$ ou $CF_4$ contribuera également à accroître la composante isotrope de la gravure.

L'effet bénéfique de ce profil particulier de l'évent se manifeste notamment lorsque l'angle β que fait le profil de l'évent avec la normale au substrat est supérieur à l'angle α défini précédemment. A titre d'exemple, pour une épaisseur de couche d'encapsulation de 800nm et pour une largeur $X_{inf}$ de l'orifice inférieur de 100nm, la largeur $X_{sup}$ de l'orifice supérieur peut être supérieure à 530nm (β=15°), voire supérieure à 680nm (β=20°).

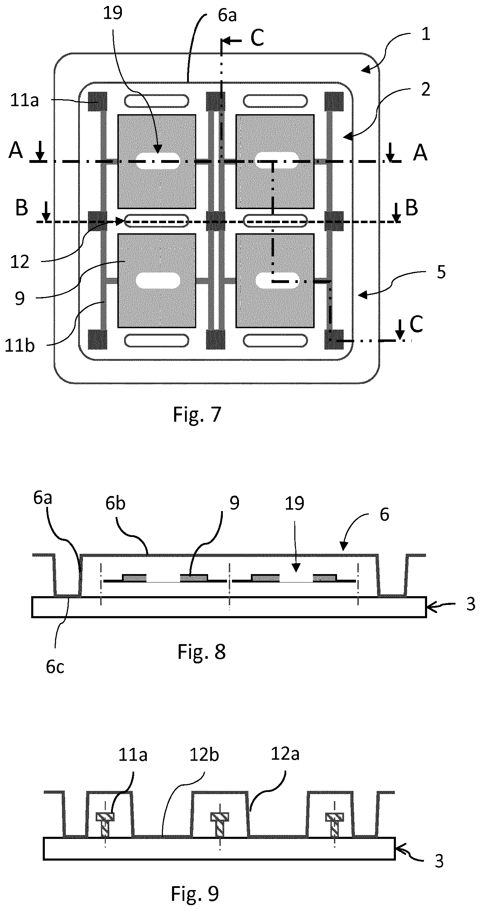

Selon un mode de réalisation représenté sur les figures 7, 8 et 9, le dispositif de détection comporte une matrice de détecteurs disposée dans une même cavité 4. La structure d'encapsulation 5 comporte en outre au moins une portion d'appui interne 12 située entre deux détecteurs adjacents 2, et de préférence une pluralité de portions d'appui interne. Certaines portions d'appui interne peuvent en outre être disposées en périphérie de la matrice de détecteurs 2, en bordure de la cavité 4. Les portions d'appui interne 12 sont formées par la couche mince d'encapsulation 6, qui comporte ainsi la paroi périphérique 6a, la paroi supérieure 6b et les portions d'appui interne 12.

Les portions d'appui interne 12 reposent, ou prennent appui, directement sur le substrat 3. En d'autres termes, elles sont en contact direct avec le substrat. Ces portions d'appui interne 12 permettent ainsi de renforcer la tenue mécanique de la capsule 5. L'adhérence de la capsule 5 sur le substrat 3 est ainsi assurée d'une part par une partie inférieure de la paroi périphérique 6a de la couche d'encapsulation 6 qui repose sur le substrat en périphérie de la cavité, et d'autre part par la ou les portions d'appui interne 12 disposé(s) dans la cavité. Cette multiplicité de surfaces de contact, réparties en bordure de la cavité et à l'intérieur de celle-ci, permet de renforcer la tenue mécanique de la capsule.

Par repose directement sur, ou prennent appui directement sur le substrat, on entend que les portions d'appui interne 12 est en contact directement avec le substrat 3, que ce soit avec le matériau constitutif du substrat ou avec une couche mince déposée sur la surface du substrat, par exemple une couche de passivation ou une couche d'accroche, que ces couches minces s'étendent de manière continue ou non. Les portions d'appui interne ne reposent donc pas sur le substrat par l'intermédiaire d'éléments tridimensionnels tels que les éléments de maintien des membranes suspendues.

Les inventeurs ont en effet constaté que, lorsque des portions d'appui de la couche d'encapsulation reposent, non pas sur le substrat, mais sur les éléments de maintien des membranes suspendues, plus précisément sur les clous d'ancrage, des problèmes d'adhérence de la capsule sur le substrat apparaissent, qui peuvent conduire à un décollement voire à la destruction de la capsule. Il semble en effet que les clous d'ancrage offrent une surface de contact et une planéité insuffisantes pour assurer une bonne adhérence des portions d'appui de la couche d'encapsulation. Le dispositif de détection selon l'invention réduit ainsi les risques de décollement de la capsule liés aux contraintes mécaniques qui siègent dans les couches minces de la capsule, qu'il s'agisse des contraintes intrinsèques desdites couches minces ou des contraintes extrinsèques résultant de la dilatation thermique différentielle de la capsule relativement au substrat.

Ainsi, la structure d'encapsulation 5 définit une cavité hermétique 4 qui loge la matrice de détecteurs thermiques 2, cette cavité 4 présentant une forme de réseau de sous-cavités, ou alvéoles, communicantes entre elles, qui logent chacune un sous-ensemble de détecteurs thermiques. Les alvéoles sont séparées les unes des autres par les portions d'appui interne. Comme expliqué précédemment, ce réseau d'alvéoles est délimité par la même couche d'encapsulation 6 qui s'étend de manière à former les parois périphérique 6a et supérieure 6b de la cavité 4 ainsi que les portions d'appui interne 12.

Ainsi, le dispositif de détection de rayonnement 1 comporte une cavité hermétique 4 qui loge une pluralité de détecteurs thermiques 2, tout en présentant une tenue mécanique de cavité renforcée par la présence de la ou des portions d'appui interne 12 qui reposent directement sur le substrat 3. Le fait de loger une pluralité de détecteurs thermiques 2 dans la cavité autorise l'augmentation du taux de remplissage, par exemple en diminuant le pas de matriçage ou en agrandissant les membranes absorbantes 9, voire en mutualisant les clous d'ancrage 11a. Par ailleurs, le couplage électrique parasite entre détecteurs 2 est évité dans la mesure où les portions d'appui interne 12 ne sont pas en contact des clous d'ancrage. Ce dispositif autorise en outre l'allongement des bras d'isolation thermique 11b pour améliorer l'isolation thermique des membranes absorbantes 9.

La figure 8 est une vue en coupe selon le plan A-A du dispositif de détection 1 représenté sur la figure 7. Elle montre plus en détail la couche d'encapsulation 6 s'étendant autour et au-dessus de la matrice de détecteurs 2 de manière à former la cavité 4. La paroi périphérique 6a forme la bordure de la cavité et la paroi supérieure 6b s'étend au-dessus des détecteurs 2. La paroi périphérique 6a présente une partie inférieure 6c périphérique qui est en appui, ou repose, directement sur le substrat, de manière à assurer l'adhésion de la capsule sur le substrat.

La figure 9 est une vue en coupe selon le plan B-B du dispositif de détection 1 représenté sur la figure 7. Sur cette figure, les portions d'appui interne 12 présentent chacune une paroi latérale périphérique 12a et une partie inférieure 12b, et prennent appui directement sur le substrat 3 au niveau de la paroi inférieure 12b. En d'autres termes, chaque portion d'appui interne 12 est en contact directement avec le substrat 3, que ce soit avec le matériau constitutif du substrat 3 ou, comme mentionné précédemment, avec une couche mince déposée à la surface du substrat.

Comme représenté sur la figure 7, les portions d'appui interne 12 peuvent présenter un profil, dans le plan du substrat, de forme oblongue, c'est-à-dire allongée. Elles peuvent être disposées chacune entre deux membranes suspendues adjacentes et deux clous d'ancrage voisins, de manière à optimiser le taux de remplissage. Les extrémités du profil oblong des portions d'appui interne 12 peuvent être arrondies, de manière à renforcer l'adhérence de celles-ci sur le substrat 3 par une meilleure répartition des contraintes mécaniques. La largeur des portions d'appui interne peut être inférieure à 1,5$\mu$m, par exemple comprise entre 0,5$\mu$m et 0,8$\mu$m, et la longueur peut être ajustée en fonction de l'espace disponible entre les détecteurs et notamment les clous d'ancrage.

Dans l'exemple de la figure 7, les bras d'isolation thermique 11b s'étendent principalement suivant un premier axe, et les portions d'appui interne 12 de la capsule 5 s'étendent suivant un second axe orthogonal au premier axe, entre deux membranes 9 adjacentes et deux clous d'ancrage 11a voisins. La largeur et la longueur des portions d'appui interne peuvent être optimisées en bénéficiant de la surface laissée libre dans cette zone par l'absence de bras d'isolation thermique. La surface des portions d'appui interne en contact avec le substrat peut ainsi être importante, ce qui améliore l'adhérence et la tenue mécanique de la capsule.

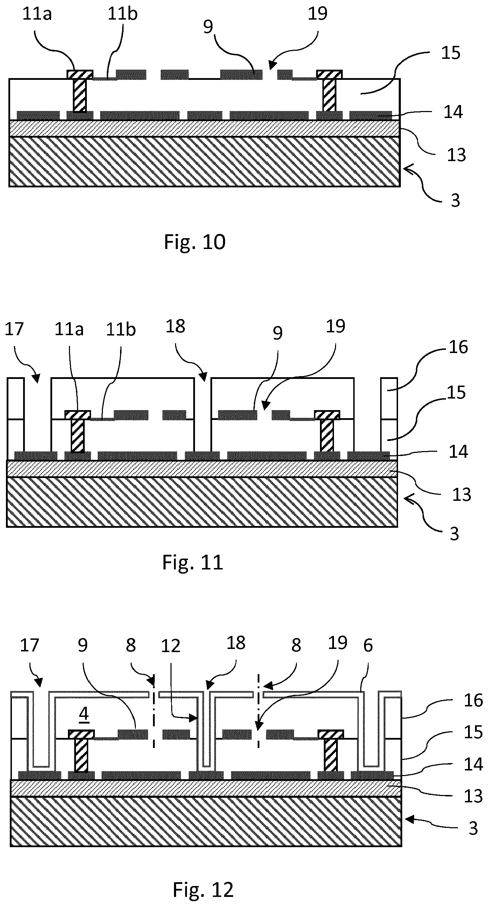

Un exemple de procédé de réalisation est maintenant détaillé, en référence aux figures 10 à 12 qui sont des vues, en coupe selon l'axe C-C, du dispositif de détection représenté sur la figure 7.

Le dispositif de détection 1 comprend un substrat 3 dans lequel est prévu un circuit de lecture et de commande des détecteurs thermiques 2. Le substrat 3 peut comprendre une couche de passivation 13, par exemple en oxyde de silicium SiO ou nitrure de silicium SiN. Selon un mode de réalisation détaillé par la suite, le substrat 3 peut également comprendre une couche d'accroche 14, continue ou non, déposée sur la couche de passivation 13. La couche d'accroche 14 peut être réalisée en titane ou en chrome, et présenter une épaisseur par exemple comprise environ entre 100nm et 300nm.

De manière connue en soi, on dépose une première couche sacrificielle 15 et on réalise les clous d'ancrage 11a, les bras d'isolation thermique 11b et les membranes absorbantes 9 dans et sur cette couche sacrificielle 15. La couche sacrificielle peut être réalisée en polyimide voire en un matériau minéral tel que de l'oxyde de silicium, du polysilicium ou du silicium amorphe.

Des étapes de photolithographie et de gravure sont réalisées pour former des orifices traversants 19 dans les membranes absorbantes 9.

Comme l'illustre la figure 11, une deuxième couche sacrificielle 16 est ensuite déposée sur la première couche sacrificielle 15, les éléments d'ancrage 11a et d'isolation thermique 11b et les membranes absorbantes 9. Elle est de préférence réalisée dans le même matériau que celui de la première couche sacrificielle 15 et présente une épaisseur par exemple comprise entre 0,5$\mu$m et 5$\mu$m.

Des étapes de photolithographie et de gravure, par exemple de gravure RIE, sont réalisées de manière à former, de préférence au cours d'une séquence d'étapes communes, des tranchées 17, 18 au travers de toute l'épaisseur des couches sacrificielles, c'est-à-dire jusqu'au substrat 3, plus précisément ici jusqu'à la couche d'accroche 14. Une première tranchée 17 est réalisée de manière à s'étendre de manière continue autour de la matrice de détecteurs 2 et est destinée à la réalisation ultérieure de la paroi périphérique de la structure d'encapsulation, et au moins une seconde tranchée 18, de préférence plusieurs, est réalisée entre deux détecteurs adjacents 2 dans le but de former par la suite la portion d'appui interne. Les premières et secondes tranchées 17, 18 présentent une profondeur sensiblement identique, de sorte que la paroi périphérique de la structure d'encapsulation et les parois latérales des portions d'appui présentent in fine une hauteur sensiblement identique. Le procédé est ainsi simplifié, notamment en ce qui concerne le contrôle de la profondeur de gravure.

Dans le cas où les couches sacrificielles 15, 16 sont en polyimide, le procédé de réalisation des tranchées peut impliquer le dépôt d'une couche de protection minérale (non représentée), par exemple en SiN ou en SiO, ou encore en silicium amorphe, sur la surface de la deuxième couche sacrificielle 16. Une étape de photolithographie permet alors de définir des ouvertures dans une couche de résine aux endroits où il est prévu de graver les tranchées. La gravure des tranchées est ensuite réalisée en 2 étapes, une première étape au cours de laquelle la couche de protection est gravée, par exemple par gravure RIE, au droit des ouvertures de la résine, une deuxième étape au cours de laquelle la première et la deuxième couche sacrificielle sont gravées, par exemple par gravure RIE, jusqu'au substrat au droit des ouvertures obtenues dans la couche de protection à la première étape de gravure. A ce stade, la couche de protection peut être supprimée.

Cet enchaînement d'étapes est justifié par des contraintes de compatibilité chimique des couches en présence et par des contraintes géométriques (facteur de forme des tranchées). En effet, la couche de résine disparait au cours de la deuxième étape de gravure du polyimide car ces couches sont toutes de nature organique, par conséquent similairement sensibles à la chimie de gravure mise en oeuvre à la deuxième étape. L'ouverture de la couche de protection est alors utilisée comme relais pour continuer à limiter la gravure aux zones où l'on souhaite réaliser les tranchées. Le procédé de la deuxième étape de gravure est par ailleurs adapté pour garantir une grande anisotropie de gravure, ce qui permet d'obtenir des facteurs de forme élevés et des flancs de gravure verticaux sans présence de surplomb. Il est en outre adapté pour garantir une sélectivité élevée d'une part vis-à-vis de la couche de protection (en SiN ou SiO) et d'autre part vis-à-vis de la surface du substrat, généralement recouverte d'une couche de passivation isolante en SiO ou SiN. Cette sélectivité élevée est avantageuse car elle permet de réduire l'épaisseur de la couche de protection (typiquement à 30 nm), ce qui est de nature à faciliter son élimination ultérieure.

Les tranchées 17, 18, notamment les secondes tranchées 18 destinées à la réalisation des portions d'appui interne, présentent un rapport de forme élevé. A titre d'exemple, des tranchées de largeur inférieure ou égale à $1,5\mu m$, par exemple comprise entre $0,5\mu m$ et $0,8\mu m$ peuvent être réalisées dans une couche de polyimide d'épaisseur comprise entre $2\mu m$ et $6\mu m$, par exemple $4\mu m$. La longueur des secondes tranchées 18 peut être adaptée en fonction des contraintes d'intégration compacte et de robustesse de la capsule, et peut être de l'ordre de quelques microns à quelques millimètres. Ces dimensions des tranchées permettent de réaliser une matrice de détecteurs thermiques à un pas de matriçage particulièrement faible, par exemple $17\mu m$ voire $12\mu m$.

La couche d'accroche 14 est de préférence réalisée en un matériau vis-à-vis duquel la gravure des tranchées est sélective, de manière à éviter toute gravure du substrat. Le matériau peut être du titane, du chrome et la couche d'accroche peut présenter une épaisseur de l'ordre de 100nm à 300nm.

Comme le montre la figure 12, une couche mince d'encapsulation 6, transparente au rayonnement à détecter, est ensuite déposée selon une technique de dépôt conforme adaptée pour obtenir un bon recouvrement des flancs verticaux des tranchées 17, 18, avec une épaisseur de couche sensiblement constante. Il peut s'agir par exemple d'une couche de silicium amorphe élaboré par CVD ou par iPVD, d'une épaisseur typiquement comprise entre environ 200nm et 2000nm lorsqu'elle est mesurée sur une surface plane. Le dépôt de la couche d'encapsulation 6 sur une surface structurée par des tranchées dont au moins une tranchée périphérique 17 continue (périmètre fermé) conduit à la formation de la capsule 5, réalisée avec le matériau de la couche d'encapsulation et formant, en contact avec le substrat 3, une cavité 4 dans laquelle est logée la matrice de détecteurs. Le recouvrement des flancs des tranchées internes 18 par la couche d'encapsulation 6 permet de reproduire la forme des tranchées internes pour former des portions d'appui interne 12, de préférence de forme oblongue avec des extrémités arrondies. Notons que ces portions d'appui interne 12 peuvent être pleines ou creuses (constituées de deux parois espacées) selon que la largeur des tranchées internes 18 est respectivement petite ou grande devant l'épaisseur de la couche d'encapsulation 6.

Des orifices traversants, formant des évents de libération 8 destinés à permettre l'évacuation des couches sacrificielles 15, 16 hors de la cavité 4, sont ensuite réalisés par photolithographie et gravure dans la couche d'encapsulation 6, et positionnés au droit des orifices traversants 19 des membranes 9. Chaque évent 8 présente un profil, dans un plan parallèle au plan du substrat, de forme oblongue aux extrémités arrondies. De préférence, le profil de chaque évent, dans un plan orthogonal à celui du substrat, présente une forme évasée, qui s'élargit à mesure qu'on s'éloigne du substrat.

On élimine ensuite les couches sacrificielles 15, 16 par attaque chimique, préférentiellement en phase gazeuse ou en phase vapeur selon la nature des couches sacrificielles (phase gazeuse dans le cas du polyimide décrit ici), de manière à former la cavité 4 logeant la matrice de détecteurs 2, et les portions d'appui interne 12. De par la forme oblongue de l'évent, cette étape est optimisée en termes de durée.

Une couche de scellement (non représentée sur la figure 12) est ensuite déposée sur la couche d'encapsulation 6 avec une épaisseur suffisante pour assurer le scellement, ou bouchage, des évents de libération 8. La qualité de l'herméticité est renforcée de par les extrémités arrondies de la forme oblongue des évents 8, ainsi que par la forme évasée de des évents.

La couche de scellement est transparente au rayonnement électromagnétique à détecter et peut présenter une fonction d'antireflet pour optimiser la transmission du rayonnement au travers de la structure d'encapsulation. A ce titre, elle peut être formée de sous-couches de germanium et de sulfure de zinc dans le cas d'un rayonnement à détecter dans la gamme des longueurs d'onde allant de 8μm à 12μm, par exemple une première sous-couche de germanium de 1,7μm environ puis une deuxième sous-couche de sulfure de zinc de 1,2μm environ. La couche de scellement est de préférence déposée par une technique de dépôt de couches minces sous vide, comme l'évaporation sous vide d'une source chauffée par faisceau d'électrons (EBPVD) ou comme la pulvérisation cathodique ou par faisceau d'ions. On obtient ainsi une cavité hermétique 4 sous vide ou pression réduite dans laquelle est logée la matrice de détecteurs thermiques 2.

Selon un mode de réalisation représenté sur les figures 7, 13 et 14, la couche d'encapsulation 6 est déposée sur le pourtour de la matrice de détecteurs 2 de sorte que la section de la couche présente, dans un plan parallèle au plan du substrat, une forme à coins arrondis.

Ainsi, la paroi périphérique 6a de la couche d'encapsulation 6 est formée, au niveau de chaque coin, de deux portions 6a-1, 6a-2 s'étendant de manière sensiblement rectiligne, suivant chacune un axe X1, X2 orthogonal l'un à l'autre. Les portions rectilignes 6a-1 et 6a-2 ne se rejoignent pas suivant un angle droit mais sont reliées l'une à l'autre par une portion arrondie 6a-3.

Par portion arrondie, on entend une portion présentant au moins un segment courbe, par exemple circulaire ou elliptique, ou au moins un segment droit, et de préférence plusieurs segments droits, s'étendant suivant un axe non colinéaire à l'axe respectif des portions rectilignes.

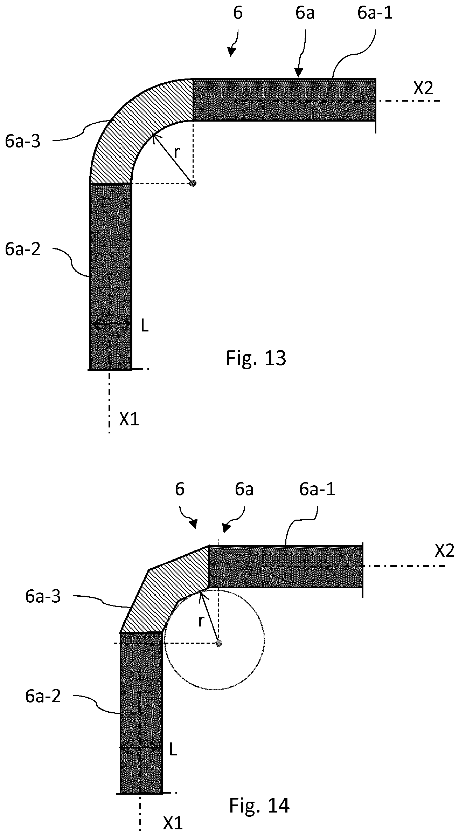

La figure 13 présente un exemple de portion arrondie 6a-3 sous forme d'un segment en arc de cercle reliant les portions rectilignes 6a-1 et 6a-2. Le rayon de cet arc de cercle, mesuré à partir de la surface externe de la portion arrondie 6a-3, c'est-à-dire orientée vers l'extérieur de la cavité (cercle exinscrit), peut être supérieur ou égal à deux fois la largeur L de la paroi périphérique. De préférence, la dimension de la portion arrondie est telle que le rayon d'un cercle inscrit, c'est-à-dire tangent à la surface interne, orientée vers la cavité, de la portion arrondie est supérieur ou égal à deux fois la largeur L.

La largeur L est définie comme la largeur moyenne d'une portion sensiblement rectiligne 6a-1, 6a-2 de la paroi périphérique 6a. La portion arrondie 6a-3 présente de préférence une largeur sensiblement égale à celle des portions rectilignes.

La figure 14 présente un autre exemple de la portion arrondie, en variante de celui de la figure 13. Dans cet exemple, la portion arrondie 6a-3 est formée par la succession de deux segments droits inclinés l'un vis-à-vis de l'autre. On peut définir un cercle exinscrit, tangent à la surface externe de chaque segment. L'orientation des segments peut être telle que le rayon du cercle exinscrit est supérieur ou égal à deux fois la largeur L de la paroi périphérique. De préférence, l'orientation des segments est telle que le rayon d'un cercle inscrit, c'est-à-dire tangent à la surface interne des segments, est supérieur ou égal à deux fois la largeur L.

A titre d'exemple, la largeur L de la paroi périphérique de la couche d'encapsulation peut être comprise entre 200nm et 2μm environ. Le rayon du cercle exinscrit ou inscrit est supérieur ou égal à une valeur comprise entre 400nm et 4μm en fonction de la largeur L, par exemple 2μm dans le cas d'une largeur L égale à 800nm.

Les inventeurs ont observé que la réalisation de portions arrondies au niveau des coins de la capsule améliore l'adhérence de celle-ci sur le substrat. Il a en effet été observé que l'adhérence de la capsule n'est pas homogène le long de la paroi périphérique et que les coins de la capsule présentent une adhérence renforcée lorsque des portions arrondies sont réalisées.

Ainsi, lorsque la capsule comporte des coins arrondis et des portions d'appui interne, on obtient une adhérence globale de la capsule sur le substrat renforcée, de par un effet conjugué entre la multiplicité des surfaces d'appui et le renfort localisé de l'adhérence aux coins de la cavité.

Bien entendu, la structure d'encapsulation à coins arrondis, décrite ici dans le cas où une même cavité loge une matrice de détecteurs, peut être utilisée dans le cas où plusieurs cavités hermétiques sont réalisées, chacune logeant un unique détecteur.

## Revendications

1.    Dispositif de détection (1) de rayonnement électromagnétique, comprenant :

        - un substrat (3),
        - au moins un détecteur thermique (2), disposé sur le substrat (3), comportant une membrane (9) adaptée à absorber le rayonnement à détecter, suspendue au-dessus du substrat (3) et isolée thermiquement de celui-ci par des éléments de maintien et d'isolation thermique (11),
        - une structure d'encapsulation (5) dudit au moins un détecteur thermique (2), comportant une couche d'encapsulation (6) s'étendant autour et au-dessus dudit au moins un détecteur thermique (2) de manière à définir avec le substrat (3) une cavité (4) dans laquelle ledit au moins un détecteur thermique (2) est situé,

        la couche d'encapsulation (6) comprenant au moins un orifice traversant (8) dit évent de libération, **caractérisé en ce que** chaque évent de libération (8) est disposé de sorte qu'au moins un détecteur thermique (2) ait un unique évent de libération (8) situé à la perpendiculaire de la membrane absorbante (9) correspondante, de préférence au droit du centre de ladite membrane absorbante (9) ;

        et **en ce que** ladite membrane absorbante (9), en regard de laquelle est situé un évent de libération (8), comporte un orifice traversant (19), situé au droit dudit évent de libération (8), de dimensions égales ou supérieures à celles dudit évent (8).

**2.** Dispositif de détection selon la revendication 1, dans lequel une pluralité de détecteurs thermiques (2) est disposée dans ladite cavité (4), la couche d'encapsulation (6) comprenant une pluralité d'évents de libération (8) disposés de sorte qu'au moins une partie desdits détecteurs thermiques (2) ait chacun un unique évent de libération (8) situé en regard de la membrane absorbante (9) correspondante, ou dans lequel un unique détecteur thermique (2) est disposé dans ladite cavité (4), la couche d'encapsulation (6) comprenant alors un unique évent de libération (8) situé en regard de la membrane absorbante (9) du détecteur thermique (2).

**3.** Dispositif de détection selon la revendication 1 ou 2, dans lequel la membrane absorbante (9) comporte un empilement d'une couche bolométrique (20), d'une couche diélectrique (21) structurée de manière à former deux portions distinctes (21a, 21b), et d'une couche électriquement conductrice (22) structurée de manière à former trois électrodes (22a, 22b, 22c), dont deux électrodes (22a, 22c) destinées à être portées à une même potentiel électrique encadrent la troisième électrode (22b) dite centrale destinée à être portée à un potentiel électrique différent, chaque électrode étant au contact de la couche bolométrique (20), l'électrode centrale (22b) étant électriquement isolée des autres électrodes (22a, 22c) par la couche diélectrique (21), l'orifice (19) traversant l'électrode centrale (22b) et la couche bolométrique (20) dans une zone située entre les portions (21a, 21b) de la couche diélectrique (21).

**4.** Dispositif de détection selon l'une quelconque des revendications 1 à 3, dans lequel la structure d'encapsulation (5) comporte en outre une couche de scellement (7) recouvrant la couche d'encapsulation (6) de manière à rendre la cavité (4) hermétique, et dans lequel le substrat (3) comprend une couche d'accroche (14) disposée en regard de l'orifice traversant (19) de la membrane (9) correspondante, et adaptée à assurer l'adhésion du matériau de la couche de scellement (7).

**5.** Dispositif de détection selon la revendication 4, dans lequel la couche d'accroche (14) s'étend sous l'ensemble de la membrane (9) correspondante et est réalisée en un matériau adapté pour assurer en outre la réflexion du rayonnement électromagnétique à détecter.

**6.** Dispositif de détection selon l'une quelconque des revendications 1 à 5, dans lequel l'évent de libération (8) présente un profil transversal, dans un plan orthogonal au plan du substrat, dont la largeur croît à mesure que la distance au substrat augmente.

**7.** Dispositif de détection la revendication 6, dans lequel la structure d'encapsulation (5) comporte en outre une couche de scellement (7) recouvrant la couche d'encapsulation (6) de manière à rendre la cavité (4) hermétique, la couche de scellement (7) comportant une bordure qui s'étend dans le sens de l'épaisseur de la couche de scellement (7), à partir de la bordure de l'évent de libération (8), avec un angle α non nul par rapport à un axe orthogonal au plan du substrat, et dans lequel le profil transversal de l'évent de libération (8) forme un angle β par rapport au même axe orthogonal supérieur à l'angle α.

**8.** Dispositif de détection selon la revendication 6 ou 7, dans lequel l'extrémité longitudinale de l'évent de libération (8) présente une forme en arc de cercle, ou est formé d'une succession de segments sensiblement rectilignes inclinés les uns par rapport aux autres.

**9.** Dispositif de détection selon l'une quelconque des revendications 1 à 8, comportant une matrice de détecteurs thermiques (2), dans lequel la couche d'encapsulation (6) comprend au moins une portion (12), dite portion d'appui interne, située entre deux détecteurs (2) adjacents, qui prend appui directement sur le substrat.

**10.** Dispositif de détection selon la revendication 9, dans lequel la portion d'appui interne (12) présente un profil, dans un plan parallèle au plan du substrat (3), de forme oblongue, de préférence aux extrémités longitudinales arrondies.

**11.** Dispositif de détection selon la revendication 9 ou 10, dans lequel la portion d'appui interne (12) comporte une paroi latérale (12a) et une partie inférieure (12b), ladite paroi latérale (12a) s'étendant dans un plan sensiblement orthogonal au plan du substrat sur toute la hauteur de la cavité (4), et la partie inférieure (12b) étant au contact du substrat (3).

**12.** Dispositif de détection selon l'une quelconque des revendications 9 à 11, dans lequel au moins une portion d'appui interne (12) est disposée entre deux membranes absorbantes (9) adjacentes et deux clous de maintien (11a) adjacents, chacun desdits clous de maintien participant au maintien desdites membranes adjacentes, et dans lequel la portion d'appui interne (12) est orientée longitudinalement le long desdites membranes (9).

**13.** Dispositif de détection selon l'une quelconque des revendications 1 à 12, dans lequel la couche d'encapsulation (6) comprenant une paroi périphérique (6a) qui entoure la matrice de détecteurs, et qui présente une section, dans un plan parallèle au plan du substrat, de forme carrée ou rectangulaire, dont les coins sont arrondis.

14. Dispositif de détection selon l'une quelconque des revendications 9 à 13 dépendant de la revendication 5, les éléments de maintien et d'isolation thermique (11) comportant des clous de maintien (11a), dans lequel la couche d'accroche (14) comporte en outre des portions sur lesquelles reposent les clous de maintien (11a), et/ou des portions sur lesquelles reposent des portions d'appui interne (12) de la couche d'encapsulation (6), et est réalisée en un matériau apte à assurer l'adhésion des clous de maintien et/ou des portions d'appui.

## Patentansprüche

1. Vorrichtung zur Erfassung (1) von elektromagnetischer Strahlung, die Folgendes beinhaltet:

    - ein Substrat (3),
    - mindestens einen thermischen Detektor (2), der auf dem Substrat (3) angeordnet ist und eine Membran (9) umfasst, die dazu angepasst ist, die zu erfassende Strahlung zu absorbieren, und die über dem Substrat (3) aufgehängt ist und von diesem durch Halte- und Wärmeisolierelemente (11) thermisch isoliert ist,
    - eine Verkapselungsstruktur (5) des mindestens einen thermischen Detektors (2), die eine Verkapselungsschicht (6) umfasst, die sich um den und oberhalb des mindestens einen thermischen Detektors (2) erstreckt, um zusammen mit dem Substrat (3) einen Hohlraum (4) zu definieren, in dem sich der mindestens eine thermische Detektor (2) befindet,
    wobei die Verkapselungsschicht (6) mindestens ein Durchgangsloch (8) beinhaltet, das als Freigabeöffnung bezeichnet wird, **dadurch gekennzeichnet, dass** jede Freigabeöffnung (8) so angeordnet ist, dass mindestens ein thermischer Detektor (2) eine einzige Freigabeöffnung (8) aufweist, die sich senkrecht zu der entsprechenden absorbierenden Membran (9), vorzugsweise lotrecht zu der Mitte der absorbierenden Membran (9), befindet;
    und dass die absorbierende Membran (9), gegenüber der sich eine Freigabeöffnung (8) befindet, ein Durchgangsloch (19) umfasst, das sich lotrecht zu der Freigabeöffnung (8) befindet und Abmessungen aufweist, die gleich oder größer als diejenigen der Öffnung (8) sind.

2. Erfassungsvorrichtung nach Anspruch 1, wobei eine Vielzahl von thermischen Detektoren (2) in dem Hohlraum (4) angeordnet sind, wobei die Verkapselungsschicht (6) eine Vielzahl von Freigabeöffnungen (8) beinhaltet, die so angeordnet sind, dass mindestens ein Teil der thermischen Detektoren (2) jeweils eine einzige Freigabeöffnung (8) aufweist, die sich gegenüber der entsprechenden absorbierenden Membran (9) befindet, oder wobei ein einziger thermischer Detektor (2) in dem Hohlraum (4) angeordnet ist, wobei die Verkapselungsschicht (6) in diesem Fall eine einzige Freigabeöffnung (8) beinhaltet, die sich gegenüber der absorbierenden Membran (9) des thermischen Detektors (2) befindet.

3. Erfassungsvorrichtung nach Anspruch 1 oder 2, wobei die absorbierende Membran (9) eine Übereinanderschichtung aus Folgendem umfasst: einer bolometrischen Schicht (20), einer dielektrischen Schicht (21), die so strukturiert ist, dass sie zwei unterschiedliche Abschnitte (21a, 21b) bildet, und einer elektrisch leitfähigen Schicht (22), die so strukturiert ist, dass sie drei Elektroden (22a, 22b, 22c) bildet, wobei zwei Elektroden (22a, 22c), die dazu bestimmt sind, auf einem gleichen elektrischen Potential zu sein, die dritte Elektrode (22b), die als mittig bezeichnet wird und dazu bestimmt ist, auf einem unterschiedlichen elektrischen Potential zu sein, einrahmen, wobei jede Elektrode mit der bolometrischen Schicht (20) in Kontakt ist, wobei die mittige Elektrode (22b) durch die dielektrische Schicht (21) von den anderen Elektroden (22a, 22c) elektrisch isoliert ist, wobei das Loch (19) in einem Bereich durch die mittige Elektrode (22b) und die bolometrische Schicht (20) hindurchgeht, der sich zwischen den Abschnitten (21a, 21b) der dielektrischen Schicht (21) befindet.

4. Erfassungsvorrichtung nach einem beliebigen der Ansprüche 1 bis 3, wobei die Verkapselungsstruktur (5) ferner eine Versiegelungsschicht (7) umfasst, die die Verkapselungsschicht (6) so abdeckt, dass der Hohlraum (4) hermetisch abgedichtet ist, und wobei das Substrat (3) eine Haftschicht (14) beinhaltet, die gegenüber dem Durchgangsloch (19) der entsprechenden Membran (9) angeordnet ist und dazu angepasst ist, das Anhaften des Materials der Versiegelungsschicht (7) zu gewährleisten.

5. Erfassungsvorrichtung nach Anspruch 4, wobei sich die Haftschicht (14) unter der gesamten entsprechenden Membran (9) erstreckt und aus einem Material hergestellt ist, das dazu angepasst ist, ferner die Reflexion der zu erfassenden elektromagnetischen Strahlung zu gewährleisten.

6. Erfassungsvorrichtung nach einem beliebigen der Ansprüche 1 bis 5, wobei die Freigabeöffnung (8) in einer zu der Ebene des Substrats orthogonalen Ebene ein Querschnittsprofil aufweist, dessen Breite mit zunehmendem Abstand zu dem Substrat größer wird.

7. Erfassungsvorrichtung nach Anspruch 6, wobei die Verkapselungsstruktur (5) ferner eine Versiegelungsschicht (7) umfasst, die die Verkapselungsschicht (6) so abdeckt, dass der Hohlraum (4) hermetisch abgedichtet ist, wobei die Versiegelungsschicht (7) eine Umrandung umfasst, die sich von der Umrandung der Freigabeöffnung (8) in Bezug auf eine zu der Substratebene orthogonale Achse mit einem Winkel α ungleich null in Richtung der Dicke der Versiegelungsschicht (7) erstreckt, und wobei das Querschnittsprofil der Freigabeöffnung (8) in Bezug auf dieselbe orthogonale Achse einen Winkel β bildet, der größer als der Winkel α ist.

8. Erfassungsvorrichtung nach Anspruch 6 oder 7, wobei das Längsende der Freigabeöffnung (8) eine Kreisbogenform aufweist oder aus einer Folge von im Wesentlichen geradlinigen Segmenten besteht, die in Bezug zueinander geneigt sind.

9. Erfassungsvorrichtung nach einem beliebigen der Ansprüche 1 bis 8, die eine Matrix aus thermischen Detektoren (2) umfasst, wobei die Verkapelungsschicht (6) mindestens einen Abschnitt (12), als Innenstützabschnitt bezeichnet, beinhaltet, der sich zwischen zwei benachbarten Detektoren (2) befindet und der sich direkt auf dem Substrat abstützt.

10. Erfassungsvorrichtung nach Anspruch 9, wobei der Innenstützabschnitt (12) in einer zu der Substratebene (3) parallelen Ebene ein längliches Profil, vorzugsweise mit abgerundeten Längsenden, aufweist.

11. Erfassungsvorrichtung nach Anspruch 9 oder 10, wobei der Innenstützabschnitt (12) eine Seitenwand (12a) und einen unteren Teil (12b) umfasst, wobei sich die Seitenwand (12a) in einer zu der Substratebene im Wesentlichen orthogonalen Ebene über die gesamte Höhe des Hohlraums (4) erstreckt und der untere Teil (12b) mit dem Substrat (3) in Kontakt ist.

12. Erfassungsvorrichtung nach einem beliebigen der Ansprüche 9 bis 11, wobei mindestens ein Innenstützabschnitt (12) zwischen zwei benachbarten absorbierenden Membranen (9) und zwei benachbarten Haltestiften (11a) angeordnet ist, wobei jeder der Haltestifte am Halten der benachbarten Membranen mitwirkt, und wobei der Innenstützabschnitt (12) längs entlang der Membranen (9) ausgerichtet ist.

13. Erfassungsvorrichtung nach einem beliebigen der Ansprüche 1 bis 12, wobei die Verkapelungsschicht (6) eine Umfangswand (6a) beinhaltet, die die Detektormatrix umgibt und die in einer zu der Substratebene parallelen Ebene eine Sektion mit quadratischer oder rechteckiger Form aufweist, deren Ecken abgerundet sind.

14. Erfassungsvorrichtung nach einem beliebigen der Ansprüche 9 bis 13 in Abhängigkeit von Anspruch 5, wobei die Halte- und Wärmeisolierelemente (11) Haltestifte (11a) umfassen, wobei die Haftschicht (14) ferner Abschnitte, auf denen die Haltestifte (11a) aufliegen, und/oder Abschnitte, auf denen Innenstützabschnitte (12) der Verkapelungsschicht (6) aufliegen, umfasst und aus einem Material hergestellt ist, das dazu fähig ist, das Anhaften der Haltestifte und/oder der Stützabschnitte zu gewährleisten.

**Claims**

1. Device (1) for detecting electromagnetic radiation, comprising:

   - a substrate (3);
   - at least one thermal detector (2), placed on the substrate (3), including a membrane (9) suitable for absorbing the radiation to be detected, which membrane is suspended above the substrate (3) and thermally insulated therefrom by thermally insulating holding elements (11);
   - an encapsulating structure (5) encapsulating said at least one thermal detector (2), including an encapsulating layer (6) extending around and above said at least one thermal detector (2) so as to define with the substrate (3) a cavity (4) in which said at least one thermal detector (2) is located;
   the encapsulating layer (6) comprising at least one through-orifice (8) that is what is referred to as an exhaust vent,
   **characterized in that** each exhaust vent (8) is placed so that at least one thermal detector (2) has a single exhaust vent (8) located perpendicular to the corresponding absorbing membrane (9), preferably plumb with the centre of said absorbing membrane (9);
   and **in that** said absorbing membrane (9), facing which is located an exhaust vent (8), includes a through-orifice (19) located plumb with said exhaust vent (8) and of a size equal to or larger than that of said vent (8).

2. Detecting device according to Claim 1, in which a plurality of thermal detectors (2) is placed in said cavity (4), the encapsulating layer (6) comprising a plurality of exhaust vents (8) placed so that at least some of said thermal detectors (2) each have a single exhaust vent (8) located facing the corresponding absorbing membrane (9), or in which a single thermal detector (2) is placed in said cavity (4), the encapsulating layer (6) then comprising a single exhaust vent (8) located facing the absorbing membrane (9) of the thermal detector (2).

3. Detecting device according to Claim 1 or 2, in which the absorbing membrane (9) includes a stack of a bolometric layer (20), of a dielectric layer (21) that is structured so as to form two separate sections (21a, 21b), and of an electrically conductive layer (22) that is structured so as to form three electrodes (22a, 22b, 22c), two of said electrodes (22a, 22c), which are intended to be raised to the same electrical potential, flanking the third electrode (22b), which is what is referred to as the central electrode and which is intended to be raised to a different electrical potential, each electrode making contact with the bolometric layer (20), the central electrode (22b) being electrically insulated from the other electrodes (22a, 22c) by the dielectric layer (21), the orifice (19) passing through the central electrode (22b) and the bolometric layer (20) in a zone located between the sections (21a, 21b) of the dielectric layer (21).

4. Detecting device according to any one of Claims 1 to 3, in which the encapsulating structure (5) furthermore includes a sealing layer (7) covering the encapsulating layer (6) so as to make the cavity (4) hermetic, and in which the substrate (3) comprises a tie layer (14) placed facing the through-orifice (19) of the corresponding membrane (9) and suitable for ensuring the adhesion of the material of the sealing layer (7).

5. Detecting device according to Claim 4, in which the tie layer (14) extends under the whole of the corresponding membrane (9) and is made of a material suitable for furthermore reflecting the electromagnetic radiation to be detected.

6. Detecting device according to any one of Claims 1 to 5, in which the exhaust vent (8) has a transverse profile, in a plane orthogonal to the plane of the substrate, the width of which increases with distance from the substrate.

7. Detecting device according to Claim 6, in which the encapsulating structure (5) furthermore includes a sealing layer (7) covering the encapsulating layer (6) so as to make the cavity (4) hermetic, the sealing layer (7) including a border that extends in the direction of the thickness of the sealing layer (7), from the border of the exhaust vent (8), with a non-zero angle α relative to an axis orthogonal to the plane of the substrate, and in which the transverse profile of the exhaust vent (8) makes an angle β to the same orthogonal axis larger than the angle α.

8. Detecting device according to Claim 6 or 7, in which the longitudinal end of the exhaust vent (8) has a circularly arcuate shape, or is formed from a succession of substantially rectilinear segments that are inclined relative to one another.

9. Detecting device according to any one of Claims 1 to 8, including a matrix of thermal detectors (2), in which the encapsulating layer (6) comprises at least one section (12), which is what is referred to as an internal bearing section, located between two adjacent detectors (2), and which bears directly against the substrate.

10. Detecting device according to Claim 9, in which the internal bearing section (12) has a profile, in a plane parallel to the plane of the substrate (3), of oblong shape, preferably with rounded longitudinal ends.

11. Detecting device according to Claim 9 or 10, in which the internal bearing section (12) includes a sidewall (12a) and a bottom section (12b), said sidewall (12a) extending in a plane substantially orthogonal to the plane of the substrate over the entire height of the cavity (4), and the bottom portion (12b) making contact with the substrate (3).

12. Detecting device according to any one of Claims 9 to 11, in which at least one internal bearing section (12) is placed between two adjacent absorbing membranes (9) and two adjacent holding pins (11a), each of said holding pins participating in the holding of said adjacent membranes, and in which the internal bearing section (12) is oriented longitudinally alongside said membranes (9).

13. Detecting device according to any one of Claims 1 to 12, in which the encapsulating layer (6) comprises a peripheral wall (6a) that encircles the matrix of detectors, and that has a cross section, in a plane parallel to the plane of the substrate, of square or rectangular shape the corners of which are rounded.

14. Detecting device according to any one of Claims 9 to 13 dependent on Claim 5, the thermally insulating holding elements (11) including holding pins (11a), in which the tie layer (14) furthermore includes sections on which the holding pins (11a) rest, and/or sections on which internal bearing sections (12) of the encapsulating layer (6) rest, and is made from a material able to ensure the adhesion of the holding pins and/or the bearing sections.

Fig.1

Fig.2

Fig. 3

Fig. 4

Fig. 5

Fig. 6

Fig. 7

Fig. 8

Fig. 9

**Fig. 10**

**Fig. 11**

**Fig. 12**

6    6a    6a-1

X2

6a-3

r

6a-2

L

Fig. 13

X1

6    6a    6a-1

X2

6a-3

r

6a-2

L

Fig. 14

X1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050176179 A
- EP 1106980 A
- EP 1359400 A
- EP 1067372 A